# EUROPEAN PATENT APPLICATION

(11) **EP 4 280 352 A1**
(43) Date of publication of application: **22.11.2023**
(21) Application number: 22739048.1
(22) Date of filing: 12.01.2022
(51) Int. Cl.: H01M 50/147

(54) **LOWER PLASTIC MEMBER FOR BATTERY CELL, BATTERY CELL, AND BATTERY MODULE**

(30) Priority: 14.01.2021 CN 202110045980
(71) Applicant: SVOLT ENERGY TECHNOLOGY CO., LTD, Changzhou, Jiangsu 213200 (CN)
(72) Inventor: LI, Zhidao, hangzhou, Jiangsu 213200 (CN)
(74) Representative: dompatent von Kreisler Selting Werner - Partnerschaft von Patent- und Rechtsanwälten mbB
(86) International application number: PCT/CN2022/071633
(87) International publication number: WO 2022/152170

(57) **Abstract**

The present disclosure discloses a lower plastic part (1) for battery cells, cell and battery module. The lower plastic part comprises: a lower plastic part body (11), the lower plastic part body (11) having an inner side of the lower plastic part (1) facing the pole group and an outer side of the lower plastic part (1) facing away from the pole group; an avoidance groove (12), configured on the outer side of the lower plastic part (1) to avoid the explosion-proof valve of the battery cell; a plurality of protrusions, configured on the inner side of the lower plastic part (1), at least one of the plurality of protrusions is directly opposite the avoidance groove (12).

## Description

The present disclosure claims the priority of the Chinese patent application filed to the China National Intellectual Property Administration on January 14, 2021 with the application number 202110045980.7 and the title "Lower plastic parts for battery cells, cell and battery module". The entire content is incorporated by reference in this disclosure.

### Technical Field

This disclosure relates to the field of batteries, in particular to a lower plastic part for battery cells, cell and battery module.

### Technical Background

In related technologies, in the structure of the lower plastic part in the battery cell, due to the installation of an escape slot on the lower plastic part to accommodate the explosion-proof valve, the structural strength of the lower plastic part is reduced, and the pole group in the battery cell is easy to move, resulting in poor reliability.

### Content of Application

The purpose of this disclosure is to address at least one of the technical issues existing in the prior art. For this purpose, one purpose of the present disclosure is to propose a lower plastic part for the battery cell, which is provided with a protrusion for limiting the movement of the pole group, and an avoidance groove for avoiding the explosion-proof valve. The avoidance groove and protrusion are arranged directly opposite each other, improving the structural strength and reliability of the lower plastic part, and can also be used to limit the movement of the pole group.

The lower plastic part used for battery cells according to the present disclosure includes: a lower plastic part body, wherein the lower plastic part body has an inner side of the lower plastic part facing the pole group and an outer side of the lower plastic part facing away from the pole group; an avoidance groove, arranged on the outer side of the lower plastic part to avoid the explosion-proof valve of the battery cell; multiple protrusions, configured on the inner side of the lower plastic part; at least one of the protrusions is directly opposite the avoidance groove.

A lower plastic part for battery cells according to the present disclose. The lower plastic part body is equipped with an avoidance groove and multiple protrusions, and one of the protrusions is directly opposite to the avoidance groove. By setting the protrusion directly opposite the avoidance groove, the protrusion can enhance the structural strength of the lower plastic part body, avoid the problem of strength reduction caused by setting the avoidance groove, and improve the reliability and structural strength of the lower plastic part. Besides, multiple protrusions can be used to compress the pole group, avoiding the movement of the pole group, and is suitable for improving the reliability of the battery cell.

The additional aspects and advantages of this disclosure will be partially provided in the following description, and some will become apparent from the following description or learned through the practice of this disclosure.

### Description of figures:

The above and/or additional aspects and advantages of this disclosure will become apparent and easy to understand from the description of embodiments in conjunction with the accompanying drawings, wherein:
Figure 1 is a schematic view of the outer side structure of the lower plastic part according to the embodiment of the disclosure;
Figure 2 is a schematic view of the inner side structure of the lower plastic part according to the embodiment of the disclosure;
Figure 3 is a structural schematic view of A circled in Figure 2;
Figure 4 is a structural schematic view of the end cover assembly according to the embodiment of the disclosure;
Figure 5 is a bottom view of the end cover assembly according to the embodiment of the disclosure.

Reference signs:
Lower plastic part 1
Lower plastic part body 11
Avoidance groove 12
The perimeter wall 121 of the avoidance groove, the bottom wall 122 of the avoidance groove,
Middle convex part 131, first middle convex part sidewall 1311, middle convex bottom wall 1312, second middle convex part sidewall 1313,
the side protruding part 132, the bottom wall of the side protruding part 1321, the side wall of the side protruding part 1322, and the end plate of the side protruding part 1323,
the first gas discharge hole 101, the second gas discharge hole 102, and the leakage hole 103;
End cover assembly 2, cover body 21.

### Embodiments

The following describes in detail the embodiments of the present disclosure, examples of which are shown in the accompanying drawings, where the same or similar labels throughout represent the same or similar components or components with the same or similar functions. The embodiments described below with reference to the accompanying drawings are exemplary and are only intended to explain the present disclosure and cannot be understood as limiting it.

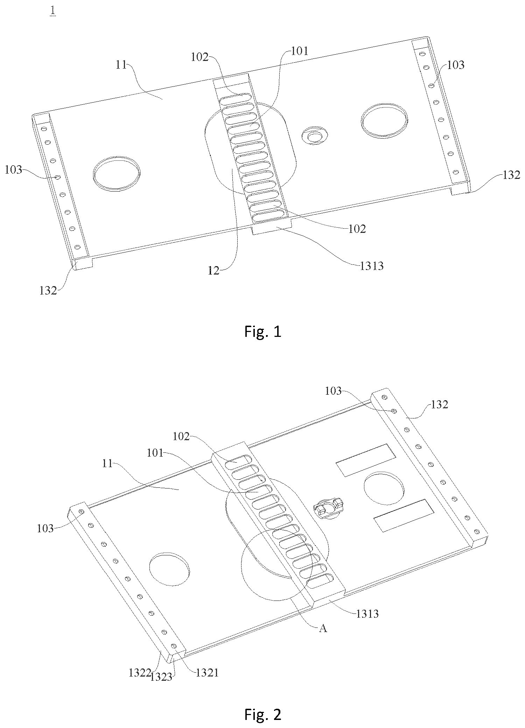

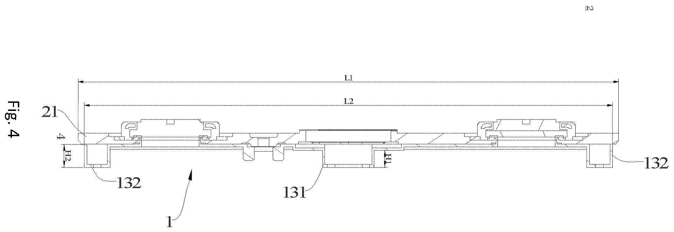

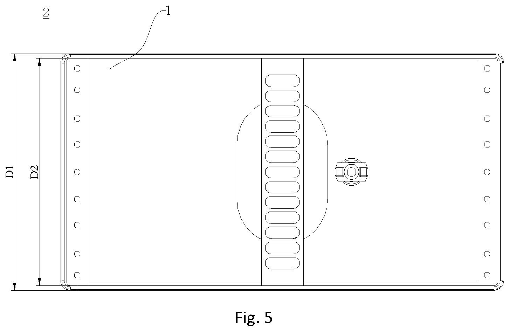

The lower plastic part 1 for the battery cell according to the disclosed embodiment is described below with reference to Figures 1 to 5.

As shown in Figures 1 and 2, the lower plastic part 1 for the battery cell according to the present disclosure includes a lower plastic part body 11, an avoidance groove 12, and a protrusion. The lower plastic part body 11 has an inner side of the lower plastic part facing the pole group and an outer side of the lower plastic part facing away from the pole group. The avoidance groove 12 is configured on the outer side of the lower plastic part to avoid the explosion-proof valve of the battery cell, and at least part of the explosion-proof valve can be accommodated in the avoidance groove 12. Multiple protrusions are arranged on the inner side of the lower plastic part 1, with at least one protrusion facing the avoidance groove 12. Multiple protrusions can be used to compress the pole group, and the protrusions can cooperate with the pole group to avoid relative movement between the pole group and the lower plastic part 1.

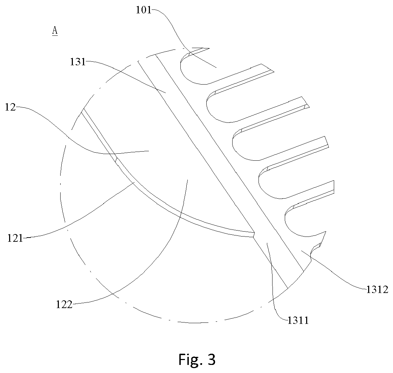

It should be noted that as shown in Figures 2 and 3, the avoidance groove 12 is a solid structure arranged on the inner side of the lower plastic part body 11. The avoidance groove 12 can be constructed as a boxed structure that faces inward and is concave. The boxed structure has a perimeter wall 121 of the avoidance groove and a bottom wall 122 of the avoidance groove. The inner surface of the lower plastic part body 11 is equipped with a through hole, and the inner circumference of the through hole can be equipped with a perimeter wall 121 of the avoidance groove extending inwardly. The bottom wall 122 of the avoidance groove is arranged at the inner end of the circumferential wall 121 of the avoidance groove, and the circumferential wall 121 and the bottom wall 122 of the avoidance groove limit the space for the explosion-proof valve to be accommodated. The explosion-proof valve is directly opposite the avoidance groove 12, and at least part of the explosion-proof valve can be accommodated in the avoidance groove 12.

Furthermore, by setting the protrusion directly opposite the avoidance groove 12, the protrusion can be used to strengthen the structural strength of the lower plastic part body 11. Due to the installation of an avoidance groove 12 on the lower plastic part 1, the overall structural strength of the lower plastic part 1 is reduced, especially in the position where an avoidance groove 12 is installed. But by placing the protrusion directly opposite to the avoidance groove 12, the raised part can compensate for the structural strength reduction of the lower plastic part body 11 caused by the installation of the avoidance groove 12.

According to the lower plastic part 1 for the battery cell of the disclosure, the lower plastic part body 11 is provided with an avoidance groove 12 and multiple protrusions, one of which is set directly opposite the avoidance groove 12. By setting the protrusion directly opposite the avoidance groove 12, the protrusion can strengthen the structural strength of the lower plastic part 11, avoid the problem of strength reduction caused by setting the avoidance groove 12, and improve the reliability and structural strength of the lower plastic part 1. Multiple protrusions can be used to compress the pole group, avoiding the movement of the pole group, and is suitable for improving the reliability of the battery cell.

According to an embodiment of the present disclosure, the protrusion includes: a middle protrusion 131 and side protrusiona 132 located on both sides of the middle protrusion 131, the middle protrusion 131 directly facing the avoidance groove 12. It should be noted that the middle protrusion 131 can be located in the middle of the lower plastic part body 11. The avoidance groove 12 is generally located in the middle of the lower plastic part body 11 to face the explosion-proof valve on the battery cover plate, while the side protrusion 132 can be arranged on one or both sides of the middle protrusion 131. The middle protrusion 131 can be used to strengthen the structural strength of the lower plastic part body 11 at the side position.

As shown in Figures 2 and 3, according to one embodiment of the present disclosure, at least a portion of the middle protrusion 131 is formed on the bottom wall surface of the avoidance groove 12 and protrudes downwards. The avoidance groove 12 has a perimeter wall 121 of the avoidance groove and a bottom wall 122 of the avoidance groove. The inner surface of the lower plastic part body 11 is equipped with an opening directly opposite the explosion-proof valve. The outer edge of the opening is equipped with a downward extending avoidance groove wall 121. The lower end of the circumferential wall 121 of the avoidance groove is provided with the bottom wall 122 of the avoidance groove, and at least a portion of the middle protrusion 131 is arranged on the bottom wall 122 of the avoidance groove. The middle protrusion 131 is connected to the bottom wall 122 of the avoidance groove, and the interior of the middle protrusion 131 can be a cavity structure. The middle protrusion 131 is open towards one end of the bottom wall 122 of the avoidance groove, in order to connect the avoidance groove 12 with the interior of the middle protrusion 131 and form a cavity.

According to an embodiment of the present disclosure, the surface of the middle protrusion 131 facing downwards is provided with multiple first gas discharge holes 101 connected to the avoidance groove 12. The first gas discharge hole 101 can guide the gas inside the pole group out of the lower plastic part 1 and guide it to the explosion-proof valve. The first gas discharge hole 101 can guide the gas to the explosion-proof valve after the gas pressure inside the pole group increases. After the pressure reaches the preset value, the explosion-proof valve opens to avoid excessive pressure inside the pole group and ensure the safety of the pole group.

According to an embodiment of the present disclosure, the middle protrusion 131 is further provided with multiple second gas discharge holes 102. Multiple first gas discharge holes 101 and multiple second gas discharge holes 102 are spaced along the length direction of the middle protrusion 131.

Specifically, the middle protrusion 131 is constructed to protrude towards the inner side of the lower plastic part, and the middle protrusion 131 is constructed as a boxed structure. The middle groove 131 includes a first middle convex part sidewall 1311, a second middle convex part sidewall 1313, and a middle convex bottom wall 1312. There are two first middle convex part sidewalls 1311 and they are spaced in the length direction of the lower plastic part. At least a portion of the upper edge of the two first middle convex part sidewall 1311 is connected to the bottom wall 122 of the avoidance groove. The remaining parts of the upper edges of the two first middle convex part sidewall 1311 are connected to the lower plastic part body 11. A middle convex bottom wall 1312 is arranged between the lower ends of the two first middle convex part sidewalls 1311. There are two second middle convex part sidewalls 1313, and they are located at both ends in the extension direction of the middle protrusion 131. Each second middle convex part sidewall 1313 is connected to the end of the two first middle convex part sidewalls 1311 extending in the width direction. The lower end of each second middle convex part sidewall 1313 is connected to the end of the middle convex bottom wall 1312 extending in the width direction.

It should be noted that the surface facing downwards in the middle convex portion 131 is the middle convex bottom wall 1312.

The middle convex bottom wall 1312 is provided with a first gas discharge hole 101 and a second gas discharge hole 102. The first gas discharge hole 101 is directly opposite the avoidance groove 12, while the second gas discharge hole 102 and the first gas discharge hole 101 are spaced in the extension direction of the middle convex bottom wall 1312.

As shown in Figures 1 and 2, according to one embodiment of the present disclosure, multiple leakage holes 103 are arranged on the bottom wall of the side protrusion 132. The side protrusion comprises the bottom wall of the side protruding part 1321 and the side wall of the side protruding part 1322. The side wall of the side protruding part 1322 is constructed into two and is spaced in the length direction of the lower plastic part 1. The upper ends of the two side walls of the side protruding part 1322 are connected to the lower plastic part body 11. The lower ends of the two side walls of the side protruding part 1322 are provided with a bottom wall of the side protruding part 1321. Both ends of the side walls of the side protruding part 1322 are also equipped with end plate of the side protruding part 1323. The end plate of the side protruding part connects the side walls of the side protruding part 1322 and the bottom wall of the side protruding part 1321 to form a boxed structure. A leakage hole 103 is arranged on the bottom wall of the side protruding part 1321. The leakage hole 103 is suitable for avoiding the storage of electrolyte between the lower plastic part 1 and the cover plate during the process of injecting liquid into the battery cell. During the injection process, the electrolyte flows into the battery cell shell along with the leakage hole 103.

According to an embodiment disclosed in the present disclosure, the lower plastic part body 11 is provided with a positive pole hole and a negative pole hole. The positive pole hole and the negative pole hole are respectively arranged on both sides of the middle protrusion 131.

The following describes an embodiment according to another aspect of the present disclosure.

According to the present disclosure, an end cover assembly for battery cells is also proposed. The end cover assembly includes a cover body 21 and a lower plastic part 1, which can be constructed as the lower plastic part 1 of the above embodiment. Wherein, the length of the cover plate body 21 is L1 and the width is D1; the lower plastic part 1 is arranged on the inner side of the cover plate body 21, with the inner side being the side facing the pole group in the cover plate body 21. The length of the lower plastic part 1 is L2 and the width is D2; L2/L1 meets: 0.97 ≤ L2/L1 ≤ 0.98; D2/D1 meets: 0.8 ≤ D2/D1 ≤ 0.99.

The surface of the lower plastic part 1 formed with an avoidance groove 12 is directly aligned with the inner side of the cover plate body 21 to separate the cover plate body 21 from the end face of the pole group. This ensures that there is a gap between the cover plate body 21 and the pole group, and prevents the cover plate body 21 from being electrified.

According to the end cover assembly for battery cells of the disclosure, by setting the ratio range between the length and width of the cover body 21 and the length and width of the lower plastic part 1, it can ensure that the edge of the cover plate can be directly aligned with the battery cell shell. The lower plastic part 1 can be accommodated in the cell shell and maintains a tight fit with the cover body 21, improving the reliability of the fit between the end cover assembly 2 and the cell shell.

According to an embodiment of the present disclosure, L1 satisfies the following requirements: 145mm ≤ L1 ≤ 147mm; L2 meets: 142mm ≤ L2 ≤ 144mm.

According to an embodiment of the present disclosure, 75mm ≤ D1 ≤ 82mm; D2 meets: 71mm ≤ D2 ≤ 81mm. Furthermore, in one embodiment of the present disclosure, the lower surface of the lower plastic part 1 is provided with a protrusion. There are multiple protrusions, which are spaced in the width direction of the cover plate body 21. Multiple protrusions include a middle protrusion 131 and side protrusions 132 located on both sides of the middle protrusion 131. The height of the middle protrusion 131 is smaller than the height of the side protrusion 132, and the lower surface of the middle protrusion 131 is in the same horizontal plane as the lower surface of the side protrusion 132.

According to an embodiment of the present disclosure, the height of the middle protrusion 131 is H1, and the height of the side protrusion 132 is H2. The H1/H2 meets the following requirements: 0.8 ≤ H1/H2 ≤ 0.9.

According to an embodiment of the present disclosure, the H1 satisfies: 3.5mm ≤ H1 ≤ 3.7mm; H2 satisfies: 4.3mm ≤ H2 ≤ 4.7mm.

The following is a brief description of the battery cell according to the present disclosure.

A lower plastic part 1 as described in any of the above embodiments is provided on the battery cell according to the present disclosure. Due to the installation of the lower plastic part 1 according to the above embodiment on the battery cell of the present disclosure, the structural strength of the lower plastic part 1 in this battery cell is high. The multiple protrusions on the lower plastic part 1 can effectively fix the pole group, avoid pole group movement, and improve the overall reliability of the battery cell.

The following is a brief description of the battery module according to the present disclosure.

The battery cell of the above embodiments is provided on the battery module according to the present disclosure. Because the battery cell of the above embodiments is provided on the battery module according to the present disclosure, the overall reliability and stability of the battery module are high.

In the description of this disclosure, it should be understood that the orientation or positional relationship indicated by the terms such as "center", "longitudinal", "transverse", "length", "width", "thickness", "top", "bottom", "front", "back", "left", "right", "vertical", "horizontal", "top", "bottom", "inside", "outside", "clockwise", "counterclockwise", "axial", "radial", "circumferential" are based on the orientation or positional relationship shown in the accompanying drawings. They are only for the convenience of describing and simplifying the present disclosure, rather than indicating or implying that the device or component referred to must have a specific orientation, be constructed and operated in a specific orientation, and therefore cannot be understood as a limitation of the present disclosure.

In the description of this disclosure, "first feature" and "second feature" may include one or more of these features.

In the description of this disclosure, "a plurality of" means two or more.

In the description of this disclosure, the first feature being "above" or "below" the second feature can include direct contact between the first and second features, as well as including the first and second features being not directly in contact but making contact with other features between them.

In the description of this disclosure, the first feature being "above", "over", and "on" the second feature includes the first feature being directly above or diagonally above the second feature, or simply indicates that the horizontal height of the first feature is higher than that of the second feature.

In the description of this specification, the reference to the terms "one embodiment", "some embodiments", "illustrative embodiments", "examples", "specific examples", "some examples" and the like means that the specific features, structures, materials, or features described in conjunction with the embodiment or example are included in at least one embodiment or example of this disclosure. In this specification, the schematic expressions of the above terms do not necessarily refer to the same embodiments or examples. Moreover, the specific features, structures, materials, or features described can be combined in an appropriate manner in any one or more embodiments or examples.

Although embodiments of the present disclosure have been shown and described, ordinary technical personnel in the art can understand that: Without departing from the principles and purposes of this disclosure, various changes, modifications, substitutions, and variations can be made to these embodiments. The scope of this disclosure is limited by the claims and their equivalents.

## Claims

1. A lower plastic part for battery cell, **characterized in that** it comprises:
a lower plastic part body, the lower plastic part body having an inner side of the lower plastic part facing the pole group and an outer side of the lower plastic part facing away from the pole group;
an avoidance groove, configured on the outer side of the lower plastic part to avoid the explosion-proof valve of the battery cell;
a plurality of protrusions, configured on the inner side of the lower plastic part, at least one of the plurality of protrusions is directly opposite the avoidance groove.

2. The lower plastic part for battery cell according to claim 1, **characterized in that**: the protrusions comprise: a middle protrusion and side protrusions located on both sides of the middle protrusion, the middle protrusion being directly opposite to the avoidance groove.

3. The lower plastic part for battery cell according to claim 2, **characterized in that**: at least a portion of the middle protrusion is formed on the bottom wall of the avoidance groove and protrudes downwards.

4. The lower plastic part for battery cell according to claim 3, **characterized in that**: the surface of the middle convex part facing downwards is provided with a plurality of first gas discharge holes communicated with the avoidance groove.

5. The lower plastic part for battery cell according to claim 4, **characterized in that**: a plurality of second gas discharge holes are also arranged on the middle protrusion.

6. The lower plastic part for battery cell according to claim 5, **characterized in that**: the plurality of first gas discharge holes and the plurality of second gas discharge holes are spaced along the length direction of the middle protrusion.

7. The lower plastic part for battery cell according to claim 2, **characterized in that**: a plurality of leakage holes are arranged on the bottom wall of the side protruding part.

8. The lower plastic part for battery cell according to claim 2, **characterized in that**: the lower plastic part body is provided with a positive pole hole and a negative pole hole, the positive pole hole and the negative pole hole being respectively arranged on both sides of the middle protrusion.

9. A battery cell, **characterized in** comprising a lower plastic part according to any one of claims 1-8.

10. A battery module, **characterized in** comprising the battery cell according to claim 9.
